# EUROPÄISCHE PATENTSCHRIFT

(11) **EP 0 667 259 B1**
(45) Veröffentlichungstag und Bekanntmachung des Hinweises auf die Patenterteilung: **02.06.1999**
(21) Anmeldenummer: 95101857.1
(22) Anmeldetag: 10.02.1995
(51) Int. Cl.: B60R 1/06, B60R 1/08

(54) **Aussenspiegel für ein Kraftfahrzeug**
Outer mirror for a vehicle
Rétroviseur extérieur pour un véhicule

(30) Priorität: 14.02.1994 DE 9402385 U
(43) Veröffentlichungstag der Anmeldung: 16.08.1995
(73) Patentinhaber: Hartmann, Helmut, D-36151 Burghaun (DE)
(72) Erfinder: Hartmann, Helmut, D-36151 Burghaun (DE)
(74) Vertreter: Schlagwein, Udo, Dipl.-Ing.

(56) Entgegenhaltungen:
- EP-A- 0 028 860
- EP-A- 0 443 990
- DE-A- 2 409 748
- DE-A- 3 302 735
- DE-A- 3 806 579
- DE-A- 3 931 485
- FR-A- 2 650 982
- GB-A- 2 223 724
- US-A- 4 715 701
- US-A- 4 932 770

## Beschreibung

Die Erfindung betrifft einen Außenspiegel für ein Kraftfahrzeug, welcher in einem Spiegelgehäuse eine durch eine in etwa horizontal verlaufende Trennlinie in eine obere Spiegelfläche und eine untere Spiegelfläche unterteilte Spiegelscheibe hat und der einen Stellmotor zum Verschwenken einer Spiegelfläche um eine in etwa senkrecht verlaufende Achse aufweist.

Ein dem Oberbegriff des Anspruchs 1 entsprechen der Außenspiegel ist Gegenstand der DE-A-38 06 579. Bei dem in dieser Schrift beschriebenen Außenspiegel sind beide Spiegelflächen einzeln um jeweils zwei Achsen verstellbar. Zusätzlich ist die gesamte Spiegelscheibe mit den beiden Spiegelflächen gemeinsam verstellbar. Der Außenspiegel nach dieser Schrift ermöglicht es, Bereiche zu überwachen, die für einen üblichen Außenspiegel nicht insgesamt erreichbar sind.

Durch GB-A-22 23 724 ist auch schon ein Außenspiegel bekannt, bei dem die Spiegelscheibe durch eine in etwa senkrecht verlaufende Trennlinie in eine fahrzeuginnenseitige und eine fahrzeugaußenseitige Spiegelfläche aufgeteilt ist. Bei Betätigung des Richtungsgebers kippt die fahrzeugaußenseitige Spiegelfläche um die senkrechte Achse, so dass ihre äußerste Kante sich nach vorn bewegt. Dadurch wird es dem Fahrzeugführer möglich, mit Hilfe dieser schwenkbaren Spiegelfläche vor einem Spurwechsel einen weiter seitlich liegenden Bereich hinter seinem Fahrzeug zu beobachten als bei nicht verschwenkter Spiegelfläche.

Außenspiegel der vorstehenden Art konnten sich bislang jedoch in der Praxis nicht durchsetzen, obwohl es immer wieder zu Unfällen beim Überholen kommt, weil vom Ausscherenden ein in seinem "toten Winkel" befindliches, ihn überholendes Fahrzeug nicht gesehen wurde und somit ein sehr großes Bedürfnis nach einem Außenspiegel besteht, der ein Überwachen des "toten Winkels" ermöglicht.

Der bekannte Außenspiegel ermöglicht insbesondere bei Lastkraftwagen keine ausreichende Überwachung des "toten Winkels", weil ein nahe des Lastkraftwagens seitlich versetzt zu ihm befindliches Fahrzeug sich nicht nur weiter außen, sondern auch in einem schräger nach unten gerichteten Winkel zum Fahrer befindet als ein mit größerem Abstand fahrendes Fahrzeug. Ein zum Überholen eines Lastwagens ansetzender Personenwagen kann sich deshalb nicht nur seitlich des Sichtbereiches eines Spiegels, sondern auch unterhalb dieses Sichtbereiches befinden.

Der Erfindung liegt das Problem zugrunde, einen Außenspiegel der eingangs genannten Art so zu gestalten, dass eine möglichst weitgehende Beobachtung des rückwärtigen Verkehrs vor einem Überholvorgang möglich ist.

Dieses Problem wird erfindungsgemäß durch die Merkmale des Anspruchs 1 gelöst.

Bei einem solchen Außenspiegel verschwenken sich im Gegensatz zum Stand der Technik beide Spiegelflächen. Dadurch wird es möglich, zum Überwachen des rückwärtigen Verkehrs nicht nur in einen weiter seitlich liegenden Bereich, sondern auch in einen in der Höhe abweichenden Bereich einzusehen. Praktische Versuche mit dem erfindungsgemäßen Spiegel haben gezeigt, dass er es dem Fahrer vor einem Überholvorgang ermöglicht, sich ohne umzusehen davon zu überzeugen, dass die linke Fahrspur tatsächlich frei ist. Da gemäß der Erfindung von der Spiegelscheibe die untere Spiegelfläche um eine in etwa senkrecht liegende Achse verschwenkt wird, könnte man mit der anderen Spiegelfläche weniger weit nach oben oder unten sehen, wenn sie feststehend ausgebildet wäre. Das wird jedoch dank der Erfindung dadurch ausgeglichen, dass man die nicht um eine in etwa senkrechte Achse verschwenkbare Spiegelfläche um eine in etwa horizontale Achse verschwenkt und damit mit ihr weiter nach unten oder oben sehen kann. Die Spiegelflächen können in nicht verschwenkter Grundstellung sich mit den einander zugewandten Kanten unmittelbar berühren, ohne dass diese Kanten bei Verschwenken stören, weil die um die in etwa senkrecht verlaufende Achse schwenkbare Spiegelfläche in Vertikalrichtung verschieblich angeordnet ist und auf ihrer Rückseite eine von außen nach innen ansteigende Kulissenführung hat, in welcher ein Gleitstück des Spiegelgehäuses eingreift. Durch diese Gestaltung entfernt sich bei der Schwenkbewegung die eine Spiegelfläche geringfügig von der anderen, so dass der erforderliche Platz für das Kippen der Kanten der Spiegelflächen entsteht.

Die Verschwenkbarkeit der beiden Spiegelflächen kann auf sehr verschiedene Weise ermöglicht werden. Konstruktiv besonders einfach ist der Außenspiegel gestaltet, wenn gemäß einer vorteilhaften Ausgestaltung der Erfindung die in etwa senkrecht verlaufende Achse durch eine unverdrehbar mit der um sie verschwenkbaren Spiegelfläche verbundene, im Spiegelgehäuse drehbar gelagerte Welle ausgebildet ist, an der der Stellmotor angreift.

Der Außenspiegel benötigt zur Verschwenkung beider Spiegelflächen nur einen einzigen Stellmotor, wenn gemäß einer anderen Ausgestaltung der Erfindung die Welle bis hinter die um eine in etwa horizontal verlaufende Achse schwenkbare Spiegelfläche führt und hinter dieser Spiegelfläche einen radialen Finger zum verschwenken dieser Spiegelfläche um ihre in etwa horizontal verlaufende Achse hat.

Die Verschwenkung der Spiegelflächen beim Setzen und Zurückstellen des Richtungsgebers erfolgt besonders rasch, wenn der Stellmotor ein Hubmagnet ist.

Für hoch angeordnete Außenspiegel, also für Außenspiegel von Lastkraftwagen, ist eine Ausführungsform der Erfindung vorteilhaft, bei der die um die in etwa senkrecht verlaufende Achse schwenkbare Spiegelfläche einen unteren, kleineren Bereich der Spiegelscheibe bildet.

Für Personenkraftwagen hat es sich als zweckmäßig herausgestellt, dass die um die in etwa senkrecht verlaufende Achse schwenkbare Spiegelfläche einen oberen, kleineren Bereich der Spiegelscheibe bildet.

Von Vorteil ist es auch, wenn für ein hohes Fahrzeug die in etwa senkrecht verlaufende Achse an der Spiegeloberseite geringeren seitlichen Abstand vom Kraftfahrzeug hat als an der Spiegelunterseite. Hierdurch wird bei einem Lastkraftwagen oder Bus die untere Spiegelfläche beim Herausschwenken derart verkippt, dass man mit ihr nicht nur weiter seitlich, sondern auch weiter nach hinten schauen kann.

Im Gegensatz zur vorgenannten Ausführungsform ist es bei niedrigen Fahrzeugen, also bei Personenkraftwagen günstig, wenn die in etwa senkrecht verlaufende Achse an der Spiegeloberseite größeren seitlichen Abstand vom Kraftfahrzeug hat als an der Spiegelunterseite, damit man ebenfalls mit der herausgeschwenkten Spiegelfläche einen weiter im Hintergrund liegenden Bereich beobachten kann.

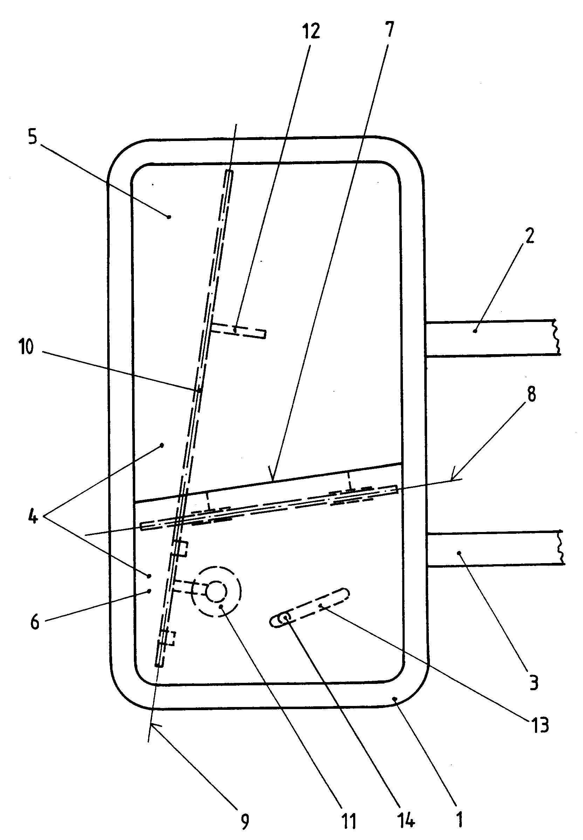

Die Erfindung lässt zahlreiche Ausführungsformen zu. Zur weiteren Verdeutlichung ihres Grundprinzips ist in der Zeichnung stark schematisch ein linker Außenspiegel eines Kraftfahrzeugs dargestellt und wird nachfolgend beschrieben.

Der dargestellte Außenspiegel hat ein Spiegelgehäuse 1 mit zwei teilweise dargestellten Befestigungsarmen 2, 3. Im Spiegelgehäuse 1 ist eine Spiegelscheibe 4 angeordnet, welche aus zwei separaten oberen und unteren Spiegelflächen 5, 6 besteht, die durch eine Trennlinie 7 voneinander getrennt sind. Diese Trennlinie 7 kann horizontal oder leicht geneigt verlaufen, wie das in der Zeichnung zu erkennen ist.

Wichtig für die Erfindung ist, dass die obere Spiegelfläche 5 um eine ebenfalls horizontal oder gegenüber der Horizontalen leicht geneigt verlaufenden Achse 8 schwenkbar ist, so dass beim Verschwenken die obere Kante der Spiegelfläche 5 sich aus der Zeichnungsebene heraus bewegt. Die untere Spiegelfläche 6 ist um eine gegenüber der Senkrechten leicht geneigten Achse 9 schwenkbar. Dadurch bewegt sich bei ihr beim Verschwenken die rechte Spiegelkante aus der Zeichnungsebene heraus.

Zur Vereinfachung der Darstellung sind auch die hinter der Spiegelscheibe 4 angeordneten Teile des Außenspiegels sichtbar dargestellt. Die Achse 9 des Außenspiegels ist durch eine drehbar im Spiegelgehäuse 1 angeordnete Welle 10 gebildet, welche mittels eines ebenfalls im Spiegelgehäuse 1 angeordneten, als Hubmagnet ausgebildeten Stellmotors 11 verdreht werden kann. Diese Welle 10 reicht nach oben bis hinter die Spiegelfläche 5 und hat dort einen Finger 12, der bei einem Verschwenken der Welle 10 gegen die Rückseite der Spiegelfläche 5 drückt und diese deshalb um die Achse 8 verschwenkt. Die Rückbewegung erfolgt durch eine nicht gezeigte Zugfeder zwischen der Spiegelfläche 5 und dem Spiegelgehäuse 1.

Die Spiegelfläche 6 hat an ihrer Rückseite eine von innen nach außen gesehen abfallende Kulissenführung 13, in die ein ortsfestes Gleitstück 14 des Spiegelgehäuses 1 greift. Weiterhin ist die Spiegelfläche 6 auf der Welle 10 in Längsrichtung der Welle 10 verschieblich, nimmt jedoch an ihrer Drehbewegung teil. Schwenkt die Spiegelfläche 6 nach außen, dann gleitet die Kulissenführung 13 über das Gleitstück 14. Infolge des schrägen Verlaufs der Kulissenführung 13 wird dabei die Spiegelfläche 6 nach unten verschoben.

Nicht dargestellt ist ein PKW-Außenspiegel, welcher sich von einem Außenrückspiegel für einen LKW meist dadurch unterscheidet, dass er wesentlich breiter als hoch und plan ist. Bei einem solchen Außenspiegel ist es zweckmäßig, wenn die um die in etwa senkrecht verlaufende Achse schwenkbare Spiegelfläche einen oberen, kleineren Bereich der Spiegelscheibe bildet.

### Bezugszeichenliste

- 1: Spiegelgehäuse
- 2: Befestigungsarm
- 3: Befestigungsarm
- 4: Spiegelscheibe
- 5: obere Spiegelfläche
- 6: untere Spiegelfläche
- 7: Trennlinie
- 8: in etwa horizontal verlaufende Achse
- 9: in etwa senkrecht verlaufende Achse
- 10: Welle
- 11: Stellmotor
- 12: Finger
- 13: Kulissenführung
- 14: Gleitstück

## Patentansprüche

1. Außenspiegel für ein Kraftfahrzeug, welcher in einem Spiegelgehäuse (1) eine durch eine in etwa horizontal verlaufende Trennlinie (7) in eine obere Spiegelfläche (5) und eine untere Spiegelfläche (6) unterteilte Spiegelscheibe (4) hat und der einen Stellmotor (11) zum Verschwenken einer Spiegelfläche (6; 5) um eine in etwa senkrecht verlaufende Achse (9) aufweist, wobei die andere, nicht um die in etwa senkrecht verlaufende Achse (9) verschwenkbare Spiegelfläche (5; 6) um eine etwa horizontal in der Nähe der Trennlinie (7) verlaufende Achse (8) schwenkbar ausgebildet ist, **dadurch gekennzeichnet**, dass die in etwa senkrecht verlaufende Achse (9) gegenüber der Innenkante der Spiegelfläche (6) nach außen versetzt ist, und dass die um die in etwa senkrecht verlaufende Achse (9) verschwenkbare Spiegelfläche (6; 5) in Vertikalrichtung verschieblich angeordnet ist und auf ihrer Rückseite eine von außen nach innen ansteigende Kulissenführung (13) hat, in welche ein Gleitstück (14) des Spiegelgehäuses (1) eingreift.

2. Außenspiegel nach Anspruch 1, **dadurch gekennzeichnet**, dass die in etwa senkrecht verlaufende Achse (9) durch eine unverdrehbar mit der um sie verschwenkbaren Spiegelfläche (6; 5) verbundene, im Spiegelgehäuse (1) drehbar gelagerte Welle (10) ausgebildet ist, an der der Stellmotor (11) angreift.

3. Außenspiegel nach Anspruch 2, **dadurch gekennzeichnet**, dass die Welle (10) bis hinter die um die in etwa horizontal verlaufende Achse (8) schwenkbare Spiegelfläche (5; 6) führt und hinter dieser Spiegelfläche (5; 6) einen radialen Finger (12) zum Verschwenken dieser Spiegelfläche (5; 6) um ihre in etwa horizontal verlaufende Achse (8) hat.

4. Außenspiegel nach zumindest einem der vorangehenden Ansprüche, **dadurch gekennzeichnet**, dass der Stellmotor (11) ein Hubmagnet ist.

5. Außenspiegel nach zumindest einem der vorangehenden Ansprüche, **dadurch gekennzeichnet**, dass die um die in etwa senkrecht verlaufende Achse (9) schwenkbare Spiegelfläche (6) einen unteren, kleineren Bereich der Spiegelscheibe (4) bildet.

6. Außenspiegel nach zumindest einem der vorangehenden Ansprüche, **dadurch gekennzeichnet**, dass die um die in etwa senkrecht verlaufende Achse (9) schwenkbare Spiegelfläche (5) einen oberen, kleineren Bereich der Spiegelscheibe bildet.

7. Außenspiegel nach zumindest einem der vorangehenden Ansprüche, **dadurch gekennzeichnet**, dass für ein hohes Fahrzeug die in etwa senkrecht verlaufende Achse (9) an der Spiegeloberseite geringeren seitlichen Abstand vom Kraftfahrzeug hat als an der Spiegelunterseite.

8. Außenspiegel nach Anspruch 6, **dadurch gekennzeichnet**, dass für ein niedriges Fahrzeug die in etwa senkrecht verlaufende Achse (9) an der Spiegeloberseite größeren seitlichen Abstand vom Kraftfahrzeug hat als an der Spiegelunterseite.

## Claims

1. Outside mirror for a motor vehicle which has a mirror glass (4) divided along an approximately horizontally extending separating line (7) into an upper mirror surface (5) and a lower mirror surface (6) in a mirror housing (1) and comprises a servomotor (11) for swivelling one mirror surface (6; 5) about an axis (9) which extends approximately vertically, the other mirror surface (5; 6) which is not swivellable about the approximately vertically extending axis (9) being adapted to swivel about an axis (8) extending approximately horizontally in the proximity of the separating line (7), characterised in that the approximately vertically extending axis (9) is offset toward the outside with respect to the inner edge of the mirror surface (6) and in that the mirror surface (6; 5) swivellable about the approximately vertically extending axis (9) is disposed displaceably in the vertical direction and has, on its back, a connecting link guide (13) which ascends from the outside to the inside and in which a sliding block (14) of the mirror housing (1) engages.

2. Outside mirror according to claim 1, characterised in that the approximately vertically extending axis (9) is formed by a shaft (10) which is connected non-rotatably to the mirror surface (6; 5) swivellable about it, is disposed rotatably in the mirror housing (1) and on which the servomotor (11) acts.

3. Outside mirror according to claim 2, characterised in that the shaft (10) leads to behind the mirror surface (5; 6) swivellable about the approximately horizontally extending axis (8) and has a radial finger (12) located behind this mirror surface (5; 6) for swivelling this mirror surface (5; 6) about its approximately horizontally extending axis (8).

4. Outside mirror according to at least one of the preceding claims, characterised in that the servomotor (11) is a solenoid.

5. Outside mirror according to at least one of the preceding claims, characterised in that the mirror surface (6) swivellable about the approximately vertically extending axis (9) forms a lower smaller area of the mirror glass (4).

6. Outside mirror according to at least one of the preceding claims, characterised in that the mirror surface (5) swivellable about the approximately vertically extending axis (9) forms an upper smaller area of the mirror glass.

7. Outside mirror according to at least one of the preceding claims, characterised in that, for a high vehicle, the approximately vertically extending axis (9) on the mirror top side has a smaller lateral distance from the vehicle than on the mirror bottom side.

8. Outside mirror according to claim 6, characterised in that, for a low vehicle, the approximately vertically extending axis (9) on the mirror top side has a larger lateral distance from the vehicle than on the mirror bottom side.

## Revendications

1. Rétroviseur extérieur pour un véhicule automobile qui comprend , dans un boîtier de rétroviseur (1), une glace (4) divisée par une ligne de séparation (7) s'étendant à peu près horizontalement en une surface réfléchissante supérieure (5) et une surface réfléchissante inférieure (6), et qui présente un servomoteur (11) pour faire pivoter une surface réfléchissante (6 ; 5) autour d'un axe (9) s'étendant à peu près verticalement, l'autre surface réfléchissante (5 ; 6), qui ne peut pas pivoter autour de l'axe (9) s'étendant à peu près verticalement, étant construite pour pivoter autour d'un axe (8) s'étendant à peu près horizontalement dans le voisinage de la ligne de séparation (7), caractérisé en ce que l'axe (9) s'étendant à peu près verticalement est déporté vers l'extérieur par rapport au bord intérieur de la surface réfléchissante (6) et en ce que la surface réfléchissante (6 ; 5) qui peut pivoter autour de l'axe (9) s'étendant à peu près horizontalement est agencée mobile en translation dans la direction verticale et possède, sur sa face dorsale, un guidage à coulisse (13) qui monte de l'extérieur vers l'intérieur et dans lequel est engagé un coulisseau (14) du boîtier de miroir (1).

2. Rétroviseur extérieur selon la revendication 1, caractérisé en ce que l'axe (9) s'étendant à peu près verticalement est constitué par un arbre (10) monté rotatif dans le boîtier de rétroviseur (1), relié solidairement en rotation à la surface réfléchissante (6 ; 5) qui peut pivoter autour de cet axe, et attaqué par le servomoteur (11).

3. Rétroviseur extérieur selon la revendication 2, caractérisé en ce que l'arbre (10) se prolonge jusque derrière la surface réfléchissante (5 ; 6) qui peut pivoter autour de l'axe (8) qui s'étend à peu près horizontalement, et possède, derrière cette surface réfléchissante (5 ; 6), un doigt radial (12) servant à faire pivoter cette surface réfléchissante (5 ; 6) autour de son axe (8) qui s'étend à peu près horizontalement.

4. Rétroviseur extérieur selon au moins une des revendications précédentes, caractérisé en ce que le servomoteur (11) est un électro-aimant de translation.

5. Rétroviseur extérieur selon au moins une des revendications précédentes, caractérisé en ce que la surface réfléchissante (6) qui peut pivoter autour de l'axe (9) s'étendant à peu près verticalement forme une petite région inférieure de la glace (4).

6. Rétroviseur extérieur selon au moins une des revendications précédentes, caractérisé en ce que la surface réfléchissante (5) qui peut pivoter autour de l'axe (9) s'étendant à peu près verticalement forme une petite région supérieure de la glace.

7. Rétroviseur extérieur selon au moins une des revendications précédentes, caractérisé en ce que, pour un véhicule de grande hauteur, l'axe (9) s'étendant à peu près verticalement se trouve à une plus petite distance latérale du véhicule au niveau du côté supérieur du miroir qu'au niveau du côté inférieur du miroir.

8. Rétroviseur extérieur selon la revendication 6, caractérisé en ce que, pour un véhicule de faible hauteur, l'axe (9) s'étendant à peu près verticalement se trouve à une plus grande distance latérale du véhicule au niveau du côté supérieur du miroir qu'au niveau du côté inférieur du miroir.
